# EUROPÄISCHE PATENTSCHRIFT

(11) **EP 1 640 094 B1**
(45) Veröffentlichungstag und Bekanntmachung des Hinweises auf die Patenterteilung: **13.06.2007**
(21) Anmeldenummer: 05107833.5
(22) Anmeldetag: 26.08.2005
(51) Int. Cl.: B23F 23/08, B23F 23/12, B23Q 16/10, B23Q 17/20

(54) **Vorrichtung zum Vermessen eines rotationssymmetrischen Präzisionsteiles und Spannvorrichtung**
Device for measuring of a rotationally symmetrical precision part and chuck
Dispositif pour relever les mesures d'une pièce de précision axi-symmetrique et mandrin

(30) Priorität: 22.09.2004 DE 202004014884 U
(43) Veröffentlichungstag der Anmeldung: 29.03.2006
(73) Patentinhaber: Klingelnberg GmbH, 42499 Hückeswagen (DE)
(72) Erfinder: Mikoleizig, Günter, 42499 Hückeswagen (DE)
(74) Vertreter: OK pat AG

(56) Entgegenhaltungen:
- WO-A-91/06396
- DE-C1- 3 432 771
- US-A- 3 388 477
- US-A- 5 988 960
- US-A- 6 072 569
- PATENT ABSTRACTS OF JAPAN Bd. 014, Nr. 488 (M-1039), 24. Oktober 1990 (1990-10-24) -& JP 02 198713 A (MITSUBISHI HEAVY IND LTD), 7. August 1990 (1990-08-07)

## Beschreibung

Die Erfindung betriff eine Vorrichtung zum Vermessen von rotationssymmetrischen Präzisionsteilen, vorzugsweise auf CNC-gesteuerten Verzahnungsmesszentren zum Prüfen von Stirnradverzahnungen sowie Schneid- und Schabrädern, Schnecken und Schneckenrädern, Wälzfräsern, Kegelrädern. Die Erfindung betrifft auch eine Spannvorrichtung zum Einspannen der Präzisionsteile.

### HINTERGRUND DER ERFINDUNG

Es gibt zahlreiche Bearbeitungsverfahren, zum Herstellen von rotationssymmetrischen Präzisionsteilen, wie zum Beispiel Zahnrädern. Typischerweise wird während oder nach der Bearbeitung das Präzisionsteil vermessen.
Aus dem Dokument WO 91/06396 A ist ein Koordinatenmesssystem bekannt, das einen zweiteiligen Drehtisch aufweist. Ein oberer Teller dieses Drehtischs lagert auf Kugeln, die starr in konischen Ausnehmungen eines unteren Tellers befestigt sind. Diese Kugeln sind entlang des äusseren Umfangs des unteren Tellers in entsprechenden Löchern befestigt. Der obere Teller weist an seiner Unterseite zylinderförmige Stäbe auf, die radial gerichtet sind. Setzt man den oberen Teller auf den unteren, so liegen diese Stäbe in V-förmigen Zwischenräumen, die durch jeweils benachbarte Kugeln gebildet werden. Zum Verdrehen des oberen Teller in Bezug auf den unteren Teller wird der obere Teller angehoben und in einer anderen Winkelposition abgesetzt.
Aus der DE 3432771 ist eine Vorrichtung zum Vermessen von Rotationsteilen mit einer Spannvorrichtung bekannt, die als Mehrbackenfutter ausgebildet ist.

Um die Genauigkeit der Bearbeitung eines Präzisionsteils nach der Bearbeitung prüfen zu können, kann das Präzisionsteil zum Beispiel aus der Bearbeitungsmaschine entnommen und in ein spezielles Messsystem eingespannt werden, wo es mittels Sensoren abgetastet und vermessen wird. Vorzugsweise kommen zu diesem Zweck numerisch gesteuerte Messgeräte zum Einsatz. Typischerweise wird zum Vermessen ein rotationssymmetrisches Präzisionsteil zwischen einer unteren Zentrierspitze, die auf einem Drehtisch des Messgeräts sitzt, und einer oberen Zentrierspitze eingespannt. Es ist aber auch möglich, ein rotationssymmetrisches Präzisionsteil einseitig nur auf dem Drehtisch des Messgeräts einzuspannen.

Wichtig ist eine möglichst konzentrische Einspannung, um Messungenauigkeiten zu vermeiden. Ausserdem muss durch die Einspannung gewährleistet werden können, dass eine Rotationsbewegung des Drehtischs eins zu eins auf das Präzisionsteil übertragen wird, dass heisst, die Lagerung muss lagesicher erfolgen.

Als Randbedingung ist zu berücksichtigen, dass eine Energiezuführung um Klemm- oder Spannbetätigungen automatisch am Drehtisch vornehmen zu können nicht vorhanden sind. Solche Zuführungen sind auch unerwünscht, da sie die Genauigkeit der Drehtischmessachse beeinträchtigen könnten.

Insbesondere geht es in der vorliegenden Anmeldung um CNCgesteuerte Verzahnungsmesszentren, die zum Prüfen von Stirnradverzahnungen sowie Schneid- und Schabrädern, Schnecken und Schneckenrädern, Wälzfräsern, Kegelrädern und allgemeinen Maß-, Form- und Lageabweichungen an rotationssymmetrischen Werkstücken, zur Kurven- und Nockenwellenmessung oder auch zur Rotormessung geeignet sind.

Häufig stellt sich das Problem, dass verschiedene rotationssymmetrischen Werkstücke in einem solchen Messsystem nacheinander vermessen werden sollen. Bisher musste man ein Werkstück nach dem anderen manuell auf dem Drehtisch mit einer geeigneten Vorrichtung - zum Beispiel einem Handspannfutter - einspannen. Falls Werkstücke unterschiedlicher Form und Grösse hintereinander zu vermessen sind, müssen eventuell auch noch Umrüstungen vorgenommen werden. Dieser Vorgang ist aufwendig und kostet vor allem Zeit. Der Flaschenhals im Durchsatz liegt im Bereich des manuellen Umrüstens und des manuellen Einspannens.

Vermehrt sollen solche Messsysteme so eingesetzt werden können, dass in schneller Abfolge die verschiedenstes Werkstücke vermessen werden können. Ausserdem sollen derartige Abläufe einfach und reproduzierbar ausführbar sein.

Solchen Anforderungen werden die herkömmlichen Messsysteme nicht gerecht.

Es ist eine Aufgabe der Erfindung eine Messsystem bereit zu stellen, das universell einsetzbar und je nach Bedarf zum Vermessen verschiedener Werkstücke dienen kann.

Es ist eine Aufgabe der Erfindung eine Messsystem bereit zu stellen, das automatisiert werden kann.

Ausserdem soll eine entsprechende Spannvorrichtung bereitgestellt werden.

Die Aufgabe wird durch eine Vorrichtung gemäss Anspruch 1 und eine Spannvorrichtung gemäss Anspruch 10 gelöst.

Vorteilhafte Ausgestaltungen des erfindungsgemässen Vorrichtung bilden die Gegenstände der Ansprüche 2 bis 9.

### ZEICHNUNGEN

Ausführungsbeispiele der Erfindung werden im Folgenden unter Bezugnahme auf die Zeichnungen näher beschrieben. Es zeigen:
- **FIG. 1**: ein Messsystem, gemäss Erfindung;
- **FIG. 2**: ein erste Spannvorrichtung, gemäss Erfindung;
- **FIG. 3**: ein zweite Spannvorrichtung, gemäss Erfindung;
- **FIG. 4**: ein dritte Spannvorrichtung, gemäss Erfindung;
- **FIG. 5**: einen Ausschnitt einer vierten Spannvorrichtung, gemäss Erfindung;
- **FIG. 6**: einen Ausschnitt einer fünften Spannvorrichtung, gemäss Erfindung.

### DETAILIERTE BESCHREIBUNG

Im Zusammenhang mit der vorliegenden Beschreibung werden Begriffe verwendet, die auch in einschlägigen Publikationen und Patenten Verwendung finden.

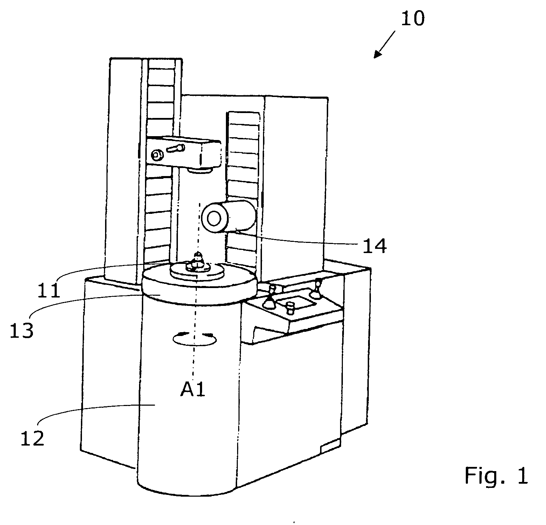

Eine erste erfindungsgemässe Vorrichtung 10 (auch Messzentrum genannt) ist in Fig. 1 gezeigt. Anhand dieser Figur wird das Umfeld erläutert in dem die Erfindung zur Anwendung kommen kann. Gezeigt ist ein vollautomatisches, CNC-gesteuertes Verzahnungsmesszentrum 10. Das Messzentrum 10 ist geeignet zum Prüfen von Stirnradverzahnungen sowie Schneid- und Schabrädern, Schnecken und Schneckenrädern, Wälzfräsern, Kegelrädern und allgemeinen Maß-, Form- und Lageabweichungen an rotationssymmetrischen Werkstücken, zur Kurven- und Nockenwellenmessung oder auch zur Rotormessung, um nur einige Einsatzmöglichkeiten aufzuzählen.

Die Vorrichtung 10 umfasst einen über eine Ansteuerung 12 antreibbaren Drehteller 13. Auf dem Drehteller 13 ist ein zu vermessendes rotationssymmetrisches Präzisionsteil 11 koaxial in Bezug auf die Drehachse A1 eingespannt, wie in Fig. 1 angedeutet. Die Ansteuerung 12 umfasst einen Antrieb und die Steuerung des Antriebs. Beides ist in Fig. 1 nicht sichtbar, da sich diese Elemente hinter einer Verkleidung des Messsystems 10 befinden. An einer Radialachse 14 kann zum Beispiel ein Tastkopf oder dergleichen befestigt werden, um das Präzisionsteil 11 vermessen zu können.

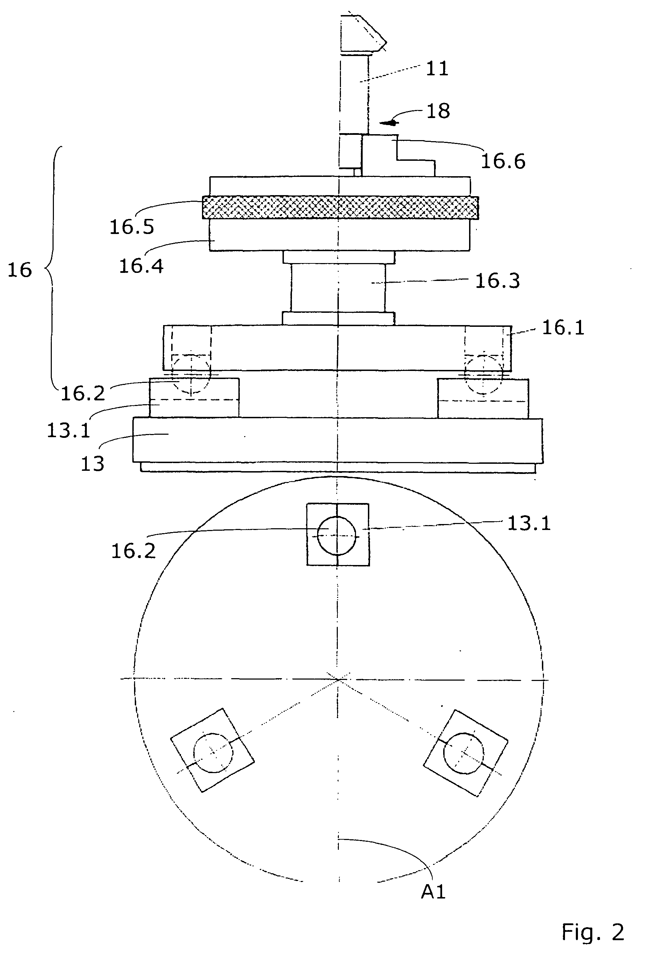

Gemäss Erfindung ist das Präzisionsteil 11 in einer Spannvorrichtung 16 eingespannt. Diese Spannvorrichtung 16 weist einen Adapter (16.1) auf, der auf dem Drehteller 13 sitzt, wie anhand der Figuren 2, 3 und 4 erläutert wird.

In Fig. 2 ist gezeigt, wie mit der erfindungsgemässen Spannvorrichtung 16 ein Ritzel 11 eingespannt werden kann. Im oberen Teil der Fig. 2 ist eine Hälfte des Ritzels 11 angedeutet. Dieses Ritzel 11 sitzt mit seiner Welle zwischen den Spannbacken 16.6 der Spannvorrichtung 16. Durch den Pfeil 18 ist angedeutet, dass die Spannbacken 16.6 durch radiales Bewegen in Richtung der Drehachse A1 die Welle einspannen.

Die Spannbacken 16.6 sitzen auf einem Teller 16.4, der zur manuellen Betätigung einen Ring 16.5 aufweist. Die Spannvorrichtung 16 ist ähnlich wie das Spannfutter einer Bohrmaschinen zu betätigen. Durch das Drehen des Rings 16.5 in Bezug auf den Teller 16.4 werden die Spannbacken 16.6 geöffnet oder geschlossen. Damit können rotationssymmetrische Präzisionsteile (wie zum Beispiel das Ritzel 11) in beliebiger Grösse und Bauart schnell und problemlos eingespannt werden. In der gezeigten Ausführungsform weist die Spannvorrichtung 16 ein Zwischenstück 16.3 auf. Dieses Zwischenstück 16.3 kann zum Beispiel so ausgelegt werden, dass es einfach von Hand oder durch einen Greifer einer Zuführeinrichtung gegriffen werden kann. Das Zwischenstück 16.3, oder die Spannvorrichtung 16 bei einer Ausführungsform ohne Zwischenstück, sitzen auf einem Adapter 16.1. Dieser Adapter 16.1 ist mit Mitteln 16.2 (im vorliegenden Beispiel drei Kugeln 16.2) zur zentrierten Aufnahme auf dem Drehteller 13 ausgestattet. Auf dem Drehteller 13 sind drei Aufnahmemittel 13.1 zur Aufnahme der Mittel 16.2 vorgesehen.

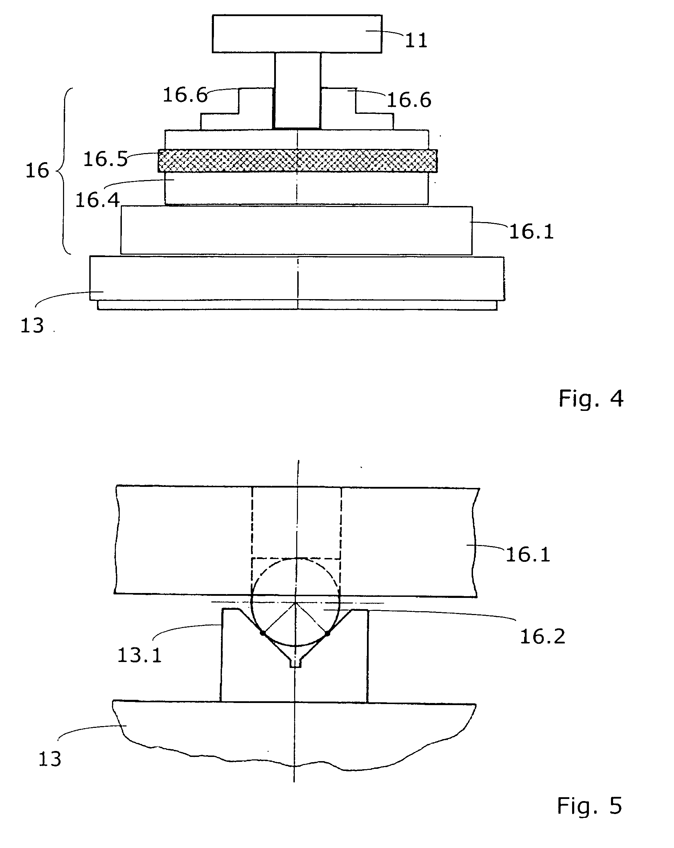

Der Adapter 16.1 kann in einer anderen Ausführungsform flach auf dem Drehteller aufliegen (siehe auch Fig. 4). In diesem Fall sind in dem Drehteller 13 Ausnehmungen zur Aufnahme der Mittel 16.2 eingelassen.

Im unteren Teil der Fig. 2 ist eine Draufsicht des Drehtellers 13 gezeigt. In dieser Draufsicht ist die Lage der Aufnahmemittel 13.1 und der Mittel 16.2 zu erkennen. Die Mittel 16.2 bilden zusammen mit den Aufnahmemitteln 13.1 eine sogenannte Dreipunkt-Lagerung. Durch diese Art der Lagerung ist die Position der Spannvorrichtung 16 samt Ritzel 11 genau definiert, d.h. die Lagerung ist konzentrisch. Ausserdem erlaubt diese Lagerung eine präzise Drehmomentübertragung vom Drehteller 13 auf die Spannvorrichtung 16 und das Ritzel 11.

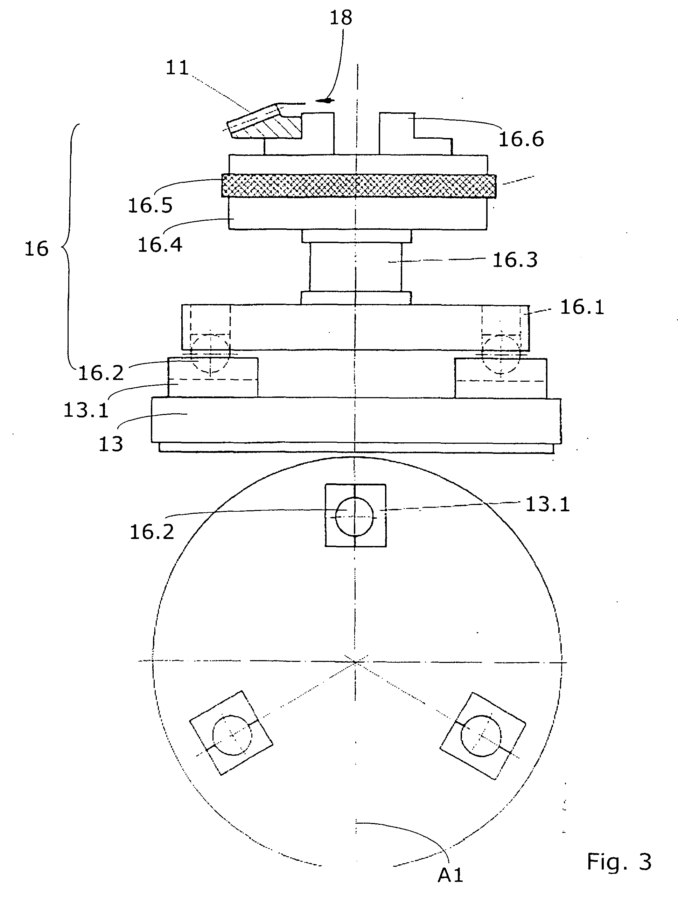

In Fig. 3 ist dieselbe Vorrichtung gezeigt. Diesmal wurde jedoch ein Tellerrad 11 eingespannt. Durch den Pfeil 18 ist angedeutet, dass die Spannbacken 16.6 durch radiales Bewegen von der Drehachse A1 weg das Tellerrad 11 spannen. Alle anderen Elemente sind in Fig. 3 identisch mit Fig.2 und werden daher nicht nochmals erläutert.

In Fig. 4 ist eine weitere Variante der Erfindung gezeigt. Es wurden dieselben Bezugszeichen wie in den Figuren 2 und 3 verwendet, obwohl sich diese Ausführungsform durch einige Details unterscheidet. Im gezeigten Beispiel ist ein Zylinderrad 11 mit einer Welle zwischen den Spannbacken 16.6 konzentrisch eingespannt. Die Spannvorrichtung 16 umfasst von oben nach unten betrachtet die Spannbacken 16.6, einen Teller 16.4, der zur manuellen Betätigung einen Ring 16.5 aufweist, und einen Adapter 16.1 (zum Beispiel eine Adapterplatte). Diese Adapterplatte 16.1 sitzt flächig auf dem Drehteller 13. Die Mittel zur zentrierten Aufnahme Spannvorrichtung 16 auf dem Drehteller 13 sind in dieser Figur nicht sichtbar. Diese Mittel sind jedoch so ausgelegt, dass die Spannvorrichtung 16 und das Präzisionsteil 11 mit dem Drehteller 13 schlupffrei drehbar verbunden sind. Im gezeigten Beispiel können drei Kugeln in dem Adapter 16.1 vorgesehen sein, die in Ausnehmungen des Drehtellers 13 eingreifen. Durch eine prismatische Form der Ausnehmungen wird die Lage genau definiert.

Die Vorrichtung 10 kann auch eine Rüststation umfassen, um mehrere Spannvorrichtungen individuell mit Präzisionsteilen 11 bestücken zu können, bevor diese dann eines nach dem anderen auf den Drehteller 13 aufgesetzt und dort vermessen werden. Dieser Ansatz ist besonders vorteilhaft, da verschiedene Präzisionsteile 11 eingespannt und damit vorbereitet werden können während eine Messung läuft. Dann kann nach Abschluss einer Vermessung das Präzisionsteil 11 samt Spannvorrichtung 16 entnommen werden, das gerade vermessen worden ist, und es kann ein anderes Präzisionsteil 11 mit einer anderen Spannvorrichtung 16 und einem anderen Adapter 16.1 aufgesetzt werden. Durch diese Art der Ausführung der Abläufe kann erheblich Zeit eingespart werden. Ausserdem geht die Auslastung des Messsystems 10 nach oben. Eine solche Rüststation kann an der Vorrichtung 10 oder extern vorhanden sein und ist besonders vorteilhaft.

Besonders bevorzugt ist eine Variante, bei der die Vorrichtung 10 eine Zuführeinrichtung umfasst, die so ausgelegt ist, dass eine mit einem Präzisionsteil 11 bestückte Spannvorrichtungen 16 von der Rüststation zum Drehteller 13 bewegt und dort aufgesetzt werden kann. Als Zuführeinrichtung kann zum Beispiel ein Roboterarm, oder dergleichen dienen. Durch die Erfindung ergibt sich der Vorteil, dass die Zuführeinrichtung immer an der gleichen Stelle der Spannvorrichtung 16 (z.B. am Zwischenstück 16.3) angreifen kann. Das macht die Ausführung der Zuführeinrichtung einfacher.

Die Erfindung eignet sich besonders für voll-automatisierte CNC-Messgeräte 10 zum Vermessen von Zahnrädern 11. Mit einem erfindungsgemässen CNC-Messgerät können neben aussenverzahnten Stirnrädern auch Innenverzahnungen, Kegelräder, Schnecken, Verzahnungswerkzeuge und dergleichen gemessen werden.

Es ist ein Vorteil der Erfindung, dass die Genauigkeit der Messung nicht beeinträchtigt wird. Im Gegenteil. Dadurch, dass das Einspannen separat von der Vorrichtung 10 erfolgen kann, ist ausreichend Zeit vorhanden, um auch komplizierte Teile 11 genau einzuspannen, bevor sie auf das Messsystem 10 gesetzt werden.

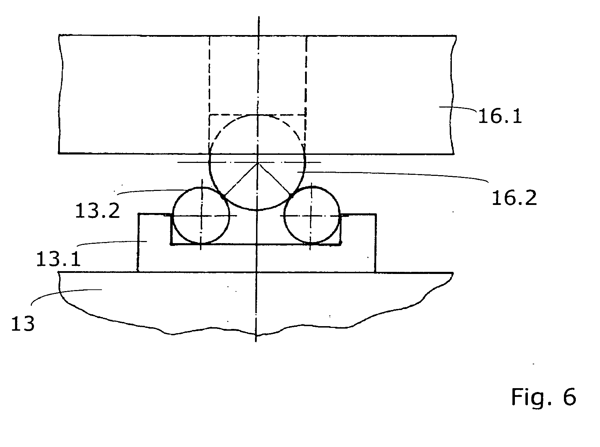

Es ist ein weiterer Vorteil, dass die Kombination aus Kugeln 16.2 und prismatischen Aufnahmeelementen 13.1 eine sehr gute zentrierende Wirkung hat. Durch das Gewicht der Gesamteinheit (Präzisionsteil 11, Spannvorrichtung 16 inkl. Adapter 16.1) ist eine sichere Lage während des Messablaufs gewährleistet. Es sind auch andere Kombinationen denkbar, wie anhand der beiden Figuren 5 und 6 erläutert wird.

In Fig. 5 ist eine Variante gezeigt, bei der eine Kugel 16.2 in einer Aufnahme 13.1 mit V-förmigem Ausschnitt liegt. Werden drei derartige Aufnahmen 13.1 mit Kugeln 16.2 auf dem Drehteller 13 vorgesehen, so sitzt der Adapter 16.1 zentrisch auf dem Drehteller 13.

In Fig. 6 ist eine Variante gezeigt, bei der eine Kugel 16.2 durch zwei kleineren Kugeln 13.2 getragen wird, die in einer Aufnahme 13.1 sitzen. Auch durch eine solche Anordnung kann eine zentrierte Lagerung des Adapters 16.1 auf dem Drehteller 13 erreicht werden.

Mit der Erfindung wird eine praktikable und sichere Lösung angeboten, die es erlaubt unterschiedlichste Werkstücke 11 nacheinander prüfen zu können.

## Patentansprüche

1. Vorrichtung (10) zum Vermessen eines rotationssymmetrischen Präzisionsteiles (11), mit
- einem Drehteller (13), der um eine Drehachse (A1) drehbar ist, wobei der Drehteller (13) Aufnahmemittel (13.1) umfasst,
- einer Ansteuerung (12) zum drehbaren Antreiben des Drehtellers (13) um die Drehachse (A1),
- einer Spannvorrichtung (16) zum koaxialen Einspannen des Präzisionsteiles (11) in Bezug auf die Drehachse (A1), wobei die Spannvorrichtung (16) einen Adapter (16.1) aufweist, der
- Mittel (16.2) umfasst, die zusammen mit den Aufnahmemittel (13.1) des Drehtellers (13) eine Dreipunktlagerung zwischen dem Adapter (16.1) und dem Drehteller (13), zur zentrierten Aufnahme der Spannvorrichtung (16) mit Adapter (16.1) auf dem Drehtellers (13), bilden,
wobei die Dreipunktlagerung so ausgelegt ist, dass die Spannvorrichtung (16), der Adapter (16.1) und das Präzisionsteil (11) durch das Antreiben des Drehtellers (13) schlupffrei um die Drehachse (A1) drehbar sind.

2. Vorrichtung (10) nach Anspruch 1, **dadurch gekennzeichnet, dass** die Spannvorrichtung (16) als Spannfutter (16.4, 16.5, 16.6) ausgelegt ist.

3. Vorrichtung (10) nach Anspruch 1, **dadurch gekennzeichnet, dass** die Spannvorrichtung (16) über ein Zwischenstück (16.3) mit dem Adapter (16.1) verbindbar ist.

4. Vorrichtung (10) nach Anspruch 1, **dadurch gekennzeichnet, dass** der Adapter (16.1) eine Fläche aufweist, die auf den Drehteller (13) aufgesetzt wird.

5. Vorrichtung (10) nach Anspruch 4, **dadurch gekennzeichnet, dass** die Mittel (13.1, 16.2) zur zentrierten Aufnahme des Adapters (16.1) drei Kugeln (16.2), die im Bereich der Fläche des Adapters (16.1) vorgesehen sind, und drei Ausnehmungen (13.1) am Drehteller (13) umfassen, wobei die drei Kugeln (16.2) in die drei Ausnehmungen (13.1) eingreifen wenn der Adapter (16.1) auf den Drehteller (13) aufgesetzt wird.

6. Vorrichtung (10) nach Anspruch 5, **dadurch gekennzeichnet, dass** die Ausnehmungen (13.1) am Drehteller (13) eine prismatische Form haben, um den Adapter (16.1) aufnehmen zu können.

7. Vorrichtung (10) nach einem der vorhergehenden Ansprüche, **dadurch gekennzeichnet, dass** sie eine Rüststation umfasst, um mehrere Spannvorrichtungen (16) individuell mit Präzisionsteilen (11) zu bestücken, bevor diese dann eines nach dem anderen auf den Drehteller (13) aufgesetzt und dort vermessen wird.

8. Vorrichtung (10) nach Anspruch 7, **dadurch gekennzeichnet, dass** sie eine Zuführeinrichtung umfasst, die so ausgelegt ist, dass eine mit einem Präzisionsteil (11) bestückte Spannvorrichtung (16) von der Rüststation zum Drehteller (13) bewegt und dort aufgesetzt werden kann.

9. Vorrichtung nach Anspruch 8, **dadurch gekennzeichnet, dass** es sich um ein voll-automatisiertes CNC-Messgerät (10) zum Vermessen von Zahnrädern (11) handelt.

10. Spannvorrichtung (16) für ein rotationssymmetrisches Präzisionsteil (11), mit
- einem Spannfutter (16.4, 16.5) und Spannbacken (16.6),
- einem Drehteller (13) für eine Messvorrichtung (10) welcher um eine Drehachse (A1) drehbar ist und drei Ausnehmungen (13.1) umfasst,
- einer Ansteuerung (12) zum drehbaren Autreiben des Drehtellers (13) um die Drehachse (A1),
- einem Adapter (16.1), der als Verbindung zum Aufsetzen auf den Drehteller (13) ausgelegt ist, sowie drei Kugeln (16.2) die auf einer Unterseite des Adapters (16.1) angeordnet sind, um so in die drei Ausnehmungen (13.1) des Drehtellers (13) eingreifen zu können wenn der Adapter (16.1) auf den Drehteller (13) aufgesetzt wird und so zur zentrierten Aufnahme des Spannfutters (16.4, 16.5) auf dem Drehteller (13) eine Dreipunktlagerung zwischen dem Adapter (16.1) und dem Drehteller (13) bilden.

## Claims

1. A device (10) for measuring a rotationally-symmetric precision part (11), having
- a rotary table (13), which is rotatable about a rotational axis (A1), the rotary table (13) comprising receptacle means (13.1),
- a drive unit (12) for rotational driving of the rotary table (13) about the rotational axis,
- a chucking device (16), for coaxially chucking the precision part (11) in relation to the rotational axis (A1), the chucking device (16) having an adapter (16.1), which
- comprises means (16.2) which, together with the receptacle means (13.1) of the rotary table (13), form a three-point mounting between the adapter (16.1) and the rotary table (13), for the centered accommodation of the chucking device (16) with adapter (16.1) on the rotary table (13),
wherein the three-point mounting is designed in such a way that the chucking device (16), the adapter (16.1), and the precision part (11) are rotatable without slip about the rotational axis driving the rotary table (13).

2. The device (10) according to Claim 1, **characterized in that** the chucking device (16) is designed as a clamping chuck (16.4, 16.5, 16.6).

3. The device (10) according to Claim 1, **characterized in that** the chucking device (16) is connectable to the adapter (16.1) via a spacer (16.3).

4. The device (10) according to Claim 1, **characterized in that** the adapter (16.1) has a surface which is placed on the rotary table (13).

5. The device (10) according to Claim 4, **characterized in that** the means (13.1, 16.2) for the centered accommodation of the adapter (16.1) comprise three balls (16.2), which are provided in the area of the face of the adapter (16.1), and three recesses (13.1) on the rotary table (13), the three balls (16.2) engaging in the three recesses (13.1) when the adapter (16.1) is placed on the rotary table (13).

6. The device (10) according to Claim 5, **characterized in that** the recesses (13.1) on the rotary table (13) have prismatic shapes to be able to accommodate the adapter (16.1).

7. The device (10) according to one of the preceding claims, **characterized in that** it comprises a set-up station to be able to provide multiple chucking devices (16) individually with precision parts (11), before they are placed one after another on the rotary table (13) and measured there.

8. The device (10) according to Claim 7, **characterized in that** it comprises a feed unit, which is designed in such a way that a chucking device (16) provided with a precision part (11) may be moved from the set-up station to the rotary table (13) and placed thereon.

9. The device according to Claim 8, **characterized in that** it is a completely automated CNC measurement unit (10) for measuring gearwheels (11).

10. A chucking device (16) for a rotationally-symmetric precision part (11), having
- a clamping chuck (16.4, 16.5) and clamping jaws (16.6),
- a rotary table (13) for a measuring device (10) which is rotatable about the rotational axis (A1) and comprises three recesses (13.1),
- a drive unit (12) for rotatably driving the rotary table (13) about the rotational axis (A1),
- an adapter (16.1), which is designed as a connection to be placed on the rotary table (13),
- as well as three balls (16.2), which are situated on a bottom side of the adapter (16.1), to thus be able to engage in the recesses (13.1) of the rotary table (13) when the adapter (16.1) is placed on the rotary table (13) and thus, for the centered accommodation of the clamping chuck (16.4, 16.5) on the rotary table (13), form a three-point mounting between the adapter (16.1) and the rotary table (13).

## Revendications

1. Dispositif (10) pour la mesure d'une pièce de précision (11) symétrique par rapport à son axe de rotation, avec
- un plateau tournant (13) qui peut tourner autour d'un axe de rotation (A1), lequel plateau tournant (13) comporte des moyens de réception (13.1),
- un actionnement (12) pour entraîner le plateau tournant (13) en rotation autour de l'axe de rotation (A1),
- un dispositif de serrage (16) pour le serrage coaxial de la pièce de précision (11) par rapport à l'axe de rotation (A1), lequel dispositif de serrage (16) possède un adaptateur (16.1), qui
- comprend de moyens (16.2) qui forment avec les moyens de logement (13.1) du plateau tournant (13) un appui à trois points entre l'adaptateur (16.1) et le plateau tournant (13), pour recevoir de manière centrée le dispositif de serrage (16) avec l'adaptateur (16.1) sur le plateau tournant (13),
l'appui à trois points étant conçu de telle manière que le dispositif de serrage (16), l'adaptateur (16.1) et la pièce de précision (11) peuvent être entraînés en rotation sans patinage autour de l'axe de rotation (A1) par l'entraînement du plateau tournant (13).

2. Dispositif (10) selon la revendication 1, **caractérisé en ce que** le dispositif de serrage (16) est conçu comme un mandrin de serrage (16.4, 16.5, 16.6).

3. Dispositif (10) selon la revendication 1, **caractérisé en ce que** le dispositif de serrage (16) peut être relié par une pièce intercalaire (16.3) à l'adaptateur (16.1).

4. Dispositif (10) selon la revendication 1, **caractérisé en ce que** l'adaptateur (16.1) possède une surface qui est posée sur le plateau tournant (13).

5. Dispositif (10) selon la revendication 4, **caractérisé en ce que** les moyens (13.1, 16.2) pour le logement centré de l'adaptateur (16.1) comprennent trois billes (16.2) prévues dans la région de la surface de l'adaptateur (16.1) et trois creux (13.1) sur le plateau tournant (13), les trois billes (16.2) se mettant en prise dans les trois creux (13.1) lorsque l'adaptateur (16.1) est posé sur le plateau tournant (13).

6. Dispositif (10) selon la revendication 5, **caractérisé en ce que** les creux (13.1) sur le plateau tournant (13) ont une forme prismatique pour pouvoir recevoir l'adaptateur (16.1).

7. Dispositif (10) selon l'une des revendications précédentes, **caractérisé en ce qu'**il comporte un poste de préparation pour munir individuellement plusieurs dispositifs de serrage (16) de pièces de précision (11) avant que celles-ci soient posées l'une après l'autre sur le plateau tournant (13) et mesurées sur celui-ci.

8. Dispositif (10) selon la revendication 7, **caractérisé en ce qu'**il comporte un dispositif d'alimentation conçu de telle façon qu'un dispositif de serrage (16) garni d'une pièce de précision (11) puisse être amené du poste de préparation au plateau tournant (13) et posé sur celui-ci.

9. Dispositif selon la revendication 8, **caractérisé en ce qu'**il s'agit d'un appareil de mesurage à commande numérique entièrement automatique (10) pour le mesurage de roues dentées (11).

10. Dispositif de serrage (16) pour une pièce de précision symétrique par rapport à son axe de rotation (11), avec
- un mandrin de serrage (16.4, 16.5) et des mâchoires de serrage (16.6),
- un plateau tournant (13) pour un dispositif de mesurage (10), qui peut tourner autour d'un axe de rotation (A1) et comporte trois creux (13.1),
- un actionnement (12) pour l'entraînement en rotation du plateau tournant (13) autour de l'axe de rotation (A1),
- un adaptateur (16.1) conçu pour servir de liaison pour la pose sur le plateau tournant (13),
- ainsi que trois billes (16.2) disposées sur une face inférieure de l'adaptateur (16.1) pour ainsi pouvoir se mettre en prise dans les trois creux (13.1) du plateau tournant (13) lorsque l'adaptateur (16.1) est posé sur le plateau tournant (13) et qui permettent ainsi, pour la réception centrée du mandrin de serrage (16.4, 16.5) sur le plateau tournant (13), un appui en trois points entre l'adaptateur (16.1) et le plateau tournant (13).
